# EUROPEAN PATENT APPLICATION

(11) **EP 2 913 271 A1**
(43) Date of publication of application: **02.09.2015**
(21) Application number: 14400016.3
(22) Date of filing: 28.02.2014
(51) Int. Cl.: B64C 27/82

(54) **Rotorcraft with at least one main rotor and at least one counter-torque rotor**

(71) Applicant: AIRBUS HELICOPTERS DEUTSCHLAND GmbH, 86609 Donauwörth (DE); Airbus Defence and Space GmbH, 85521 Ottobrunn (DE)
(72) Inventor: Pongratz, Reinhard, D-82024 Taufkirchen (DE); Schneider, Sascha, D-86405 Meitingen (DE)
(74) Representative: GPI & Associés

(57) **Abstract**

The invention is related to a rotorcraft 1 with at least one main rotor 1 a and at least one counter-torque rotor 11a, comprising: at least one duct-type portion 10 provided with a shroud 3 that defines at least one transverse duct 6, said at least one counter-torque rotor 11a comprising a plurality of counter-torque rotor blades 13 and being rotatably arranged within said at least one transverse duct 6, and said shroud 3 being equipped in the region of said at least one transverse duct 6 at least partly with a liner arrangement 3a, said liner arrangement 3a being at least adapted for reducing generation of aerodynamic noise resulting from blade tip clearance vortices occurring during rotation of said at least one counter-torque rotor 11a inside said at least one transverse duct 6 in operation of said rotorcraft 1.

## Description

The invention is related to a rotorcraft with at least one main rotor and at least one counter-torque rotor, said rotorcraft comprising the features of claim 1.

The document US 4,809,931 describes such a rotorcraft with a main rotor and a counter-torque rotor in the form of a Fenestron® tail rotor. The counter-torque rotor is positioned at a tail boom of the rotorcraft and embodied as a ducted counter-torque rotor which is rotatably arranged within a transverse duct located at a duct-type portion of the tail boom. This duct-type portion is provided with a shroud that defines the transverse duct.

It should, however, be noted that such a ducted counter-torque rotor and, more specifically, structure and arrangement of such a ducted counter-torque rotor as well as suitable means for rotationally driving it and suitable means for collective pitch control of its rotor blades are well known by the skilled person and, for instance, at least to some extent described in the documents US 4,585,341, US 3,594,097, US 4,585,341, US 4,626,172, US 4,626,173 and US 5,131,604. Therefore, a more detailed description of such ducted counter-torque rotors is omitted hereinafter for brevity and conciseness.

The above described ducted counter-torque rotors produce at least to some extent noise emissions in operation and have associated noise characteristics that could be improved. In this respect, it should be noted that more and more attention is drawn in today's rotorcraft technology to environment-friendly and energy-efficient, so-called "blue" or "green" concepts in response to a generally growing ecological awareness. While such blue or green concepts were for a long time only oriented towards fuel consumption reduction and performance improvements of rotorcrafts, recently a reduction of the noise emissions of rotorcrafts becomes a greater focus of attention. Currently, such noise emissions of ducted counter-torque rotors are e.g. reduced within predetermined ranges by means of an air flow rectifying stator positioned within the transverse duct of the shroud housing the counter-torque rotor, or by modulating the angular positions of its rotor blades, as described hereinafter.

The document EP 0 680 873 A1 describes a ducted counter-torque rotor in the form of a Fenestron® tail rotor that is provided with a multi-blade, variable-pitch rotor having a plurality of rotor blades and lying coaxially within a transverse duct of a tail boom of an associated rotorcraft and, more specifically, of a helicopter. The transverse duct is defined by a shroud that surrounds the multi-blade, variable-pitch rotor, with the axes of the blade pitch variation turning in a plant perpendicular to the axis of the transverse duct. An air flow rectifying stator with a plurality of fixed stator vanes is located in the transverse duct in close proximity to the multi-blade, variable-pitch rotor and, with respect to an air flow generated by the rotor blades, downstream thereto. The air flow rectifying stator is configured in order to straighten out the air flow generated by the rotor blades, thereby forming an outgoing air flow parallel to the multi-blade, variable-pitch rotor's axis.

The stator vanes are inclined in a radial direction relative to the axis of the transverse duct and in the opposite direction to the rotor blades. A given distance between a plane of the rotor blades' rotation and leading edges of the stator vanes at their periphery is between 1,3 and 2,5 c, where c is the chord of the rotor blades. Furthermore, the stator vanes support a housing that is arranged coaxially inside the transverse duct in order to house rotor drive transmission and pitch variation mechanisms, with the power for the multi-blade, variable-pitch rotor transmitted through a shaft that is housed in one of the stator vanes.

By the provision of the air flow rectifying stator, the acoustic energy of the noise emission produced by the counter-torque rotor in operation can generally be reduced. Thus, the noise emission as such can be diminished.

The document EP 0 680 872 A1 describes a similar ducted counter-torque rotor in the form of a Fenestron® tail rotor with a multi-blade, variable-pitch rotor having a plurality of rotor blades and an air flow rectifying stator with a plurality of stator vanes. The multi-blade, variable-pitch rotor and the air flow rectifying stator are again arranged in close proximity in a transverse duct of a tail boom of an associated rotorcraft and, more specifically, of a helicopter. However, according to the document EP 0 680 872 A1 an underlying angular distribution of the rotor blades about the multi-blade, variable-pitch rotor's axis has an irregular azimuthal modulation, so that the angle between any two rotor blades is different to the angle between any two stator vanes.

By providing both the air flow rectifying stator and the rotor blades arranged according to the selected angular distribution with the irregular azimuthal modulation, the acoustic energy of the noise emission produced by the counter-torque rotor in operation can be reduced and further an emission of pure sounds in frequency ranges where the human ear has maximum sensitivity can be avoided. Thus, the noise emission as such can be diminished in general.

The document EP 0 680 871 A1 also describes a similar ducted counter-torque rotor in the form of a Fenestron® tail rotor with a multi-blade, variable-pitch rotor having a plurality of rotor blades and an air flow rectifying stator with a plurality of stator vanes. The multi-blade, variable-pitch rotor and the air flow rectifying stator are again arranged in close proximity in a transverse duct of a tail boom of an associated rotorcraft and, more specifically, of a helicopter, with an underlying angular distribution of the rotor blades about the multi-blade, variable-pitch rotor's axis having an irregular azimuthal modulation. However, according to the document EP 0 680 871 A1, the irregular azimuthal modulation is determined from a formula based on the number of rotor blades that corresponds basically to a degraded sinusoidal law, according to which the angular position of each rotor blade is predetermined. Thereby, the actual angular position of each rotor blade is allowed to differ from this predetermined angular position by a maximum of +/- 5°.

By providing both the air flow rectifying stator and the rotor blades arranged according to the selected angular distribution with the irregular azimuthal modulation determined from a formula based on the number of rotor blades and corresponding basically to a degraded sinusoidal law, the acoustic energy of the noise emission produced by the counter-torque rotor in operation can further be reduced, while the emission of pure sounds in frequency ranges where the human ear has maximum sensitivity can still be avoided. Thus, the noise emission as such can again be diminished in general.

However, in all of the above-described counter-torque rotors the noise emission in operation can only be reduced up to a certain degree when applying the described noise emission reduction means. Thus, for further noise emission reduction new or additional noise emission reduction means are required.

Exemplary noise emission reduction means can be found in aircraft technology, where the provision of liner arrangements for noise emission reduction in so-called ducted fans or aero-engines is well-known to the skilled person. Such liner arrangements are usually provided in the form of acoustic liners positioned within an intake, bypass or exhaust nozzle of an associated gas turbine engine of the aircraft or an associated aircraft or aero-engine, and play an important role in reduction of overall aircraft noise emission.

For instance, the document US 5,782,082 describes an aircraft engine with an acoustic liner, where the acoustic liner is provided inside the aircraft engine for noise dissipation. The document US 7,124,856 B2 describes a ducted gas turbine engine of an aircraft with a passive acoustic liner system for acoustic mode scattering and subsequent sound absorption. The document US 6,557,799 B1 describes an aircraft engine and, more specifically, an aircraft jet engine having an acoustically lined bullnose fairing assembly installed within an aircraft thrust reverser for jet engine noise attenuation. The document US 3,508,838 describes a ducted gas turbine engine having a lined duct wall that is adapted to control propagation of noise emission in forward and rearward direction. The document US 4,122,672 describes a ducted gas turbine engine having an "anti-buzz" duct lining with λ/2-cell depth that is adapted to reduce a so-called "buzz-saw" noise emission. The document US 7,857,093 B2 describes an aircraft engine having a liner barrel including a deep section for improved noise attenuation.

However, it should be noted that the above described liner arrangements are currently only used for noise emission reduction of gas turbine engines of aircrafts or of aircraft or aero-engines. In other words, although such liner arrangements are well-known to the skilled person since many years, they have still not been applied to ducted counter-torque rotors of rotorcrafts and, in particular, not to shrouded counter-torque rotors of helicopters that are embodied as Fenestron® tail rotors and that produce despite currently applied noise emission reduction means a noise emission in operation that still needs to be further reduced.

It is, therefore, an object of the present invention to provide a rotorcraft with at least one main rotor and at least one counter-torque rotor, wherein the counter-torque rotor is configured to enable an improved reduction of noise emission in operation.

This object is solved by a rotorcraft with at least one main rotor and at least one counter-torque rotor, said rotorcraft comprising the features of claim 1.

More specifically, according to the invention a rotorcraft with at least one main rotor and at least one counter-torque rotor comprises at least one duct-type portion provided with a shroud that defines at least one transverse duct. Said at least one counter-torque rotor comprises a plurality of counter-torque rotor blades and is rotatably arranged within said at least one transverse duct. Said shroud is equipped in the region of said at least one transverse duct at least partly with a liner arrangement. Said liner arrangement is at least adapted for reducing generation of aerodynamic noise resulting from blade tip clearance vortices occurring during rotation of said at least one counter-torque rotor inside said at least one transverse duct in operation of said rotorcraft.

The inventive duct-type portion of the rotorcraft advantageously improves the noise characteristics of a ducted counter-torque rotor in various flight states of the rotorcraft by the provision of an advanced lining concept, thereby reducing its noise emission considerably. This advanced lining concept comprises the integration of a liner arrangement and, more specifically, of at least one aerodynamic liner for reducing the generation of aerodynamic noise into the transverse duct and, thus, into the shroud of the duct-type portion of the rotorcraft. The aerodynamic liner preferably consists of an at least approximately annular channel arranged around the counter-torque rotor in the transverse duct. This annular channel is preferentially covered by a flow resistance optimized facing sheet having a predetermined flow permeability.

Advantageously, the advanced lining concept focusses on a reduction of the overall noise emission of the ducted counter-torque rotor of the rotorcraft and an improvement of its overall noise characteristics, including the field of psycho acoustics. Besides the reduction of the overall noise emission also the annoyance of the sounds experienced by humans will reduce. Thus, the acceptance of rotorcrafts in the human society can be increased in general.

According to a preferred embodiment, said liner arrangement comprises at least one aerodynamic liner component for reducing generation of aerodynamic noise resulting from blade tip clearance vortices occurring during rotation of said at least one counter-torque rotor inside said at least one transverse duct in operation of said rotorcraft.

According to a further preferred embodiment, said at least one aerodynamic liner component is at least partly equipped with perforates, wire meshes and/or micro perforates.

According to a further preferred embodiment, said perforates, wire meshes and/or micro perforates define at least one aerodynamic liner cover sheet facing said counter-torque rotor.

According to a further preferred embodiment, said at least one aerodynamic liner cover sheet comprises an acoustic resistance comprised in a range between 0,1*ρc and 2,5*ρc, where ρ defines an underlying density of surrounding air and c defines an associated speed of sound of said surrounding air.

According to a further preferred embodiment, said liner arrangement is further adapted for tonal and broadband sound absorption.

Preferably, an acoustic liner for tonal and broadband sound absorption is integrated into the transverse duct and, thus, into the shroud of the duct-type portion of the rotorcraft. The acoustic liner is preferentially configured for a spectral absorption interval that is at least tuned to a frequency interval from 400 Hz up to 3 kHz, which is considered to be the most annoying frequency range of the ducted counter-torque rotor's noise emission, as the ducted counter-torque rotor emits most of its tonal harmonic noise which needs to be absorbed by the acoustic liner in this frequency range. The acoustic liner is, therefore, preferably designed in order to allow for tonal and broadband sound absorption within this frequency range while being provided with dimensions that allow its integration into the transverse duct and, thus, into the shroud of the duct-type portion of the rotorcraft.

According to a further preferred embodiment, said liner arrangement comprises at least one aero-acoustic liner component for tonal and broadband sound absorption and at least one aerodynamic liner component for reducing generation of aerodynamic noise resulting from blade tip clearance vortices occurring during rotation of said at least one counter-torque rotor inside said at least one transverse duct in operation of said rotorcraft.

According to a preferred embodiment, said at least one aero-acoustic liner component and said at least one aerodynamic liner component are at least partly equipped with perforates, wire meshes and/or micro perforates.

According to a preferred embodiment, said perforates, wire meshes and/or micro perforates define at least one aero-acoustic liner cover sheet and at least one aerodynamic liner cover sheet, said at least one aero-acoustic liner cover sheet and said at least one aerodynamic liner cover sheet facing said counter-torque rotor at least approximately.

According to a preferred embodiment, said at least one aero-acoustic liner cover sheet and said at least one aerodynamic liner cover sheet comprise acoustic resistances comprised in a range between 0,5*ρc and 2,5*ρc, where ρ defines an underlying density of surrounding air and c defines an associated speed of sound of said surrounding air.

According to a preferred embodiment, said at least one aero-acoustic liner cover sheet and said at least one aerodynamic liner cover sheet comprise different acoustic resistances.

According to a preferred embodiment, said at least one aero-acoustic liner component comprises a depth that varies depending on an underlying diffusor angle of said transverse duct, said depth contributing to said broadband sound absorption of said liner arrangement.

According to a further preferred embodiment, said at least one counter-torque rotor is rotatably mounted to an associated drive shaft fairing that is fixedly supported within said at least one transverse duct, said associated drive shaft fairing comprising a leading edge facing said at least one counter-torque rotor, said leading edge being equipped with associated acoustical damping means.

It should be noted that aero-acoustic interaction between the rotor blades of the counter-torque rotor and the usually geometrically dominant drive shaft fairing increases blade passing frequency noise generation and emission. By providing the leading edge of this drive shaft fairing with associated acoustical damping means, e.g. by creating a porous surface at the leading edge of the drive shaft fairing, turbulent velocity fluctuations occurring during operation of the counter-torque rotor at the drive shaft fairing can penetrate through this porous surface into the drive shaft fairing and, therefore, be reduced at least partially inside the drive shaft fairing. Such reduced turbulent velocity fluctuations lead to less noise generation and emission.

According to a further preferred embodiment, said associated acoustical damping means comprises acoustical micro-perforated mesh.

According to a further preferred embodiment, said acoustical micro-perforated mesh extends in direction of an associated chord line of said associated drive shaft fairing departing from a drive shaft fairing stagnation line over a predetermined distance that comprises 1% to 50% of an underlying drive shaft fairing chord length.

According to a further preferred embodiment, said at least one counter-torque rotor is rotatably mounted to an associated gearbox fairing that is fixedly supported by means of associated vanes within said at least one transverse duct, said associated vanes comprising leading edges facing said at least one counter-torque rotor, said leading edges being equipped with associated acoustical damping means.

It should be noted that aero-acoustic interaction between the rotor blades of the counter-torque rotor and the associated vanes of the gearbox fairing also increases blade passing frequency noise generation and emission. By providing preferably all leading edges of the associated vanes with the associated acoustical damping means, e.g. by creating porous surfaces at these leading edges, turbulent velocity fluctuations occurring during operation of the counter-torque rotor at the vanes can penetrate through these porous surfaces into the vanes and, therefore, be reduced at least partially inside the vanes. Such reduced turbulent velocity fluctuations lead to less noise generation and emission.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a side view of a rotorcraft with a counter-torque rotor provided in a duct-type portion that comprises a liner arrangement according to the invention, and an enlarged perspective view of this duct-type portion,
- Figure 2 shows a partially cut plan view of the duct-type portion of Figure 1,
- Figure 3 shows a perspective view of the liner arrangement of Figure 1, and
- Figure 4 shows a perspective view of the counter-torque rotor of Figure 1.

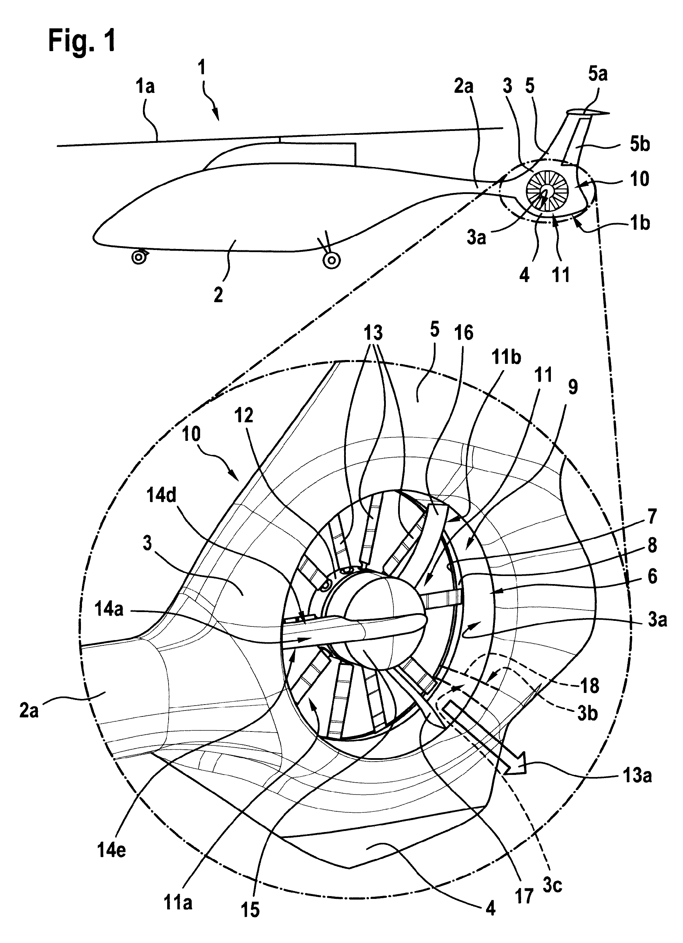

Figure 1 shows a rotorcraft 1 with a main rotor 1a and a fuselage 2 that comprises a tail boom 2a. The rotorcraft 1 is illustratively embodied, and therefore hereinafter for simplicity also referred to, as a helicopter.

The helicopter 1 comprises at least one main rotor 1 a configured to provide lift and forward thrust during operation, and at least one counter-torque device 11 configured to provide counter-torque during operation, i.e. to counter the torque created by rotation of the at least one main rotor 1 a for purposes of balancing the helicopter 1 in terms of yaw. It should, however, be noted that the present invention is not limited to helicopters and may likewise be applied to other aircrafts that are equipped with rotary wings and at least one counter-torque device according to the present invention.

The at least one counter-torque device 11 is illustratively provided at an aft section 1b of the tail boom 2a, which preferably comprises at least one duct-type portion 10. By way of example, the aft section 1b further comprises a bumper 4 and a fin 5 in the form of a T-tail having a tail wing 5a and a rudder 5b. The tail wing 5a is preferably adjustable in its inclination and can overtake the functioning of a horizontal stabilizer. Alternatively, or in addition, the helicopter 1 is provided with a suitable horizontal stabilizer. The rudder 5b is preferably adapted to provide for enhanced directional control of the helicopter 1 and can be deflected to large angles to reduce a given lateral drag of the fin 5 in sideward flight.

However, it should be noted that the T-tail configuration of the fin 5 and the rudder 5b, as well as the horizontal stabilizer, are merely described for illustrating one exemplary embodiment of the present invention and not for limiting the invention accordingly. Instead, the present invention as described hereinafter can likewise be applied to any duct-type portion of a rotorcraft, independent on whether this duct-type portion is provided with a T-tail fin or an otherwise configured fin, with or without a rudder and with or without a horizontal stabilizer.

Preferably, the duct-type portion 10 is provided with a shroud 3 that defines at least one transverse duct 6 having preferentially an at least approximately circular or annular cross section, wherein at least one counter-torque rotor 1 1 a is arranged rotatably. The at least one transverse duct 6 illustratively extends through the shroud 3. Furthermore, at least one counter-torque stator 1 1 b is fixedly arranged inside the at least one transverse duct 6 in order to support the at least one counter-torque rotor 11a rotatably. The counter-torque rotor 1 1 a, the counter-torque stator 1 1 b and the shroud 3, i.e. the transverse duct 6, illustratively define the at least one counter-torque device 11 of the helicopter 1, which is embodied in the form of a Fenestron® tail rotor.

The at least one counter-torque rotor 11a illustratively comprises a rotor hub 12 with a rotor axis and a plurality of rotor blades 13 that are attached to the rotor hub 12. The rotor blades 13 are preferably distributed in an angularly uneven manner on the rotor hub 12 using phase modulation. More specifically, phase modulation describes the technique of reshaping the noise-frequency spectrum, e.g. such that the geometric angular positions of the rotor blades 13 on the rotor hub 12 are distributed using the sinusoidal modulation law described in the document EP 0 680 871 A1 mentioned above, the teachings of which are expressly incorporated into the present application.

The at least one counter-torque stator 11b illustratively comprises a drive shaft fairing 14 that is fixedly arranged inside the at least one transverse duct 6 and connects a gearbox fairing 15 to the shroud 3. The drive shaft fairing 14 is preferably adapted to receive a power transmission shaft of the at least one counter-torque rotor 11a and illustratively comprises an upper side 14d that is oriented towards the fin 5 and a lower side 14e that is oriented towards the bumper 4. The gearbox fairing 15 is further connected to the shroud 3 by means of associated stator vanes 16, 17. Preferably, the gearbox fairing 15 is adapted to receive a rotor drive transmission of the at least one counter-torque rotor 11a and can further by adapted to receive pitch variation mechanisms for the rotor blades 13.

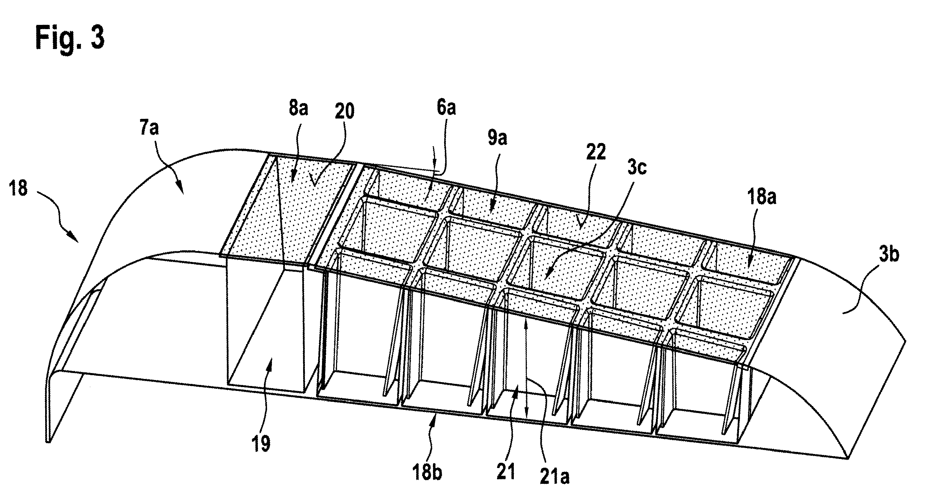

According to one embodiment, the shroud 3 is at least partly equipped with a liner arrangement 3a provided in the region of the at least one transverse duct 6, which illustratively comprises a collector part 7 and a diffusor part 9 that are interconnected by a connecting part 8. The liner arrangement 3a is preferably adapted for tonal and broadband sound absorption, and/or for reducing generation of aerodynamic noise resulting from blade tip clearance vortices occurring during rotation of the at least one counter-torque rotor 1 1 a inside the at least one transverse duct 6 in operation of the helicopter 1. An exemplary segment 18 of the at least one transverse duct 6, which corresponds to a segment 3b of the shroud 3 that comprises a segment 3c of the liner arrangement 3a, is described in detail with reference to Figure 3 below in order to further describe the liner arrangement 3a.

In operation, the at least one counter-torque rotor 11a produces counter-torque by generating an outgoing air flow 13a. This outgoing air flow 13A flows through the transverse duct 6, i.e. the shroud 3, and passes the at least one counter-torque stator 11b. Possible noise emissions in reaction to operation of the at least one counter-torque rotor 11a are thereby at least reduced by means of the liner arrangement 3a.

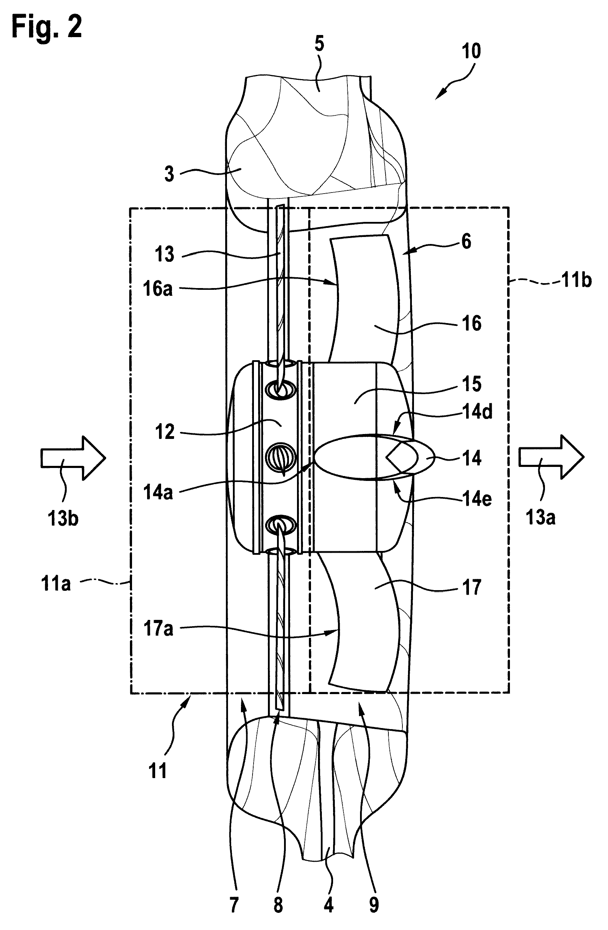

Figure 2 shows the duct-type portion 10 of Figure 1 with the at least one counter-torque rotor 11a and the at least one counter-torque stator 11b, which are arranged in the at least one transverse duct 6 of the shroud 3 that comprises the collector part 7, the connecting part 8 and the diffusor part 9. Preferably, the at least one counter-torque rotor 11a is arranged in close proximity to the at least one counter-torque stator 1 1 b and, more specifically, upstream to the at least one counter-torque stator 11 b with respect to the air flow generated by the counter-torque rotor 11a in operation.

Preferably, the at least one counter-torque stator 11b having the drive shaft fairing 14 with the upper side 14d and the lower side 14e, as well as the stator vanes 16, 17, is arranged in the region of the diffusor part 9 of the at least one transverse duct 6, where the outgoing air flow 13a exits the shroud 3. The drive shaft fairing 14 further comprises a leading edge 14a that illustratively faces the at least one counter-torque rotor 11a. The at least one counter-torque rotor 1 1 a with its rotor hub 12 and the rotor blades 13 is preferably arranged in the region of the collector part 7 and the connecting part 8 of the at least one transverse duct 6, such that the rotor blades 13 rotate in a plane defined by the connecting part 8.

In operation, the counter-torque rotor 11a rotates and, thus, generates an incoming air flow 13b that enters the at least one transverse duct 6 at the collector part 7. The incoming air flow 13b then passes through the at least one transverse duct 6, whereby it strikes at least the leading edge 14a of the drive shaft fairing 14 as well as corresponding leading edges 16a, 17a of the stator vanes 16, 17 that are facing the at least one counter-torque rotor 1 1 a, prior to exiting the at least one transverse duct 6 as the outgoing air flow 13a at the diffusor part 9.

Figure 3 shows the shroud segment 3b of Figure 1 that represents the transverse duct segment 18, which comprises the liner arrangement segment 3c. The transverse duct segment 18 is illustratively defined by a collector part segment 7a, a connecting part segment 8a and a diffusor part segment 9a.

It should be noted that the shroud segment 3b, the transverse duct segment 18 and the liner arrangement segment 3c are described in more detail in the following in order to describe a preferred embodiment of the shroud 3, the transverse duct 6 and the at least one liner arrangement 3a of Figure 1 as a whole. In other words, the liner arrangement segment 3c is described representative of the complete liner arrangement 3a.

According to a first embodiment, the liner arrangement segment 3c comprises at least one aero-acoustic liner component 21 for tonal and broadband sound absorption. The at least one aero-acoustic liner component 21 is preferably arranged in the region of the diffusor part segment 9a and, thus, defines or replaces the diffusor part segment 9a.

By way of example, the at least one aero-acoustic liner component 21 is embodied in the form of interlaced or nested hollow structures. Alternatively, the at least one aero-acoustic liner component 21 can be embodied using other liner concepts as, for instance, by using a conventional single degree of freedom liner made of honeycomb filled backing volume together with a resistive facing sheet, or by using a multi degree of freedom liner made of a special acoustic absorber like geometry within the backing volume and a resistive facing sheet or any other acoustic absorbing elements.

Illustratively, the at least one aero-acoustic liner component 21 comprises a depth 21a that varies depending on an underlying diffusor angle 6a of the transverse duct segment 18, i.e. its diffusor part segment 9a. The depth 21a contributes to the broadband sound absorption of the liner arrangement segment 3c. The underlying diffusor angle 6a is illustratively defined between an upper, i.e. outer segment side 18a and a lower, i.e. inner segment side 18b of the transverse duct segment 18 in the diffusor part segment 9a, and comprises by way of example approximately 7°, but is preferentially at least comprised in a range between 3° and 15°.

The at least one aero-acoustic liner component 21 is preferably at least partly equipped with perforates, wire meshes and/or micro perforates. These perforates, wire meshes and/or micro perforates preferentially define at least one aero-acoustic liner cover sheet 22.

The at least one aero-acoustic liner cover sheet 22 is preferably arranged on the liner arrangement segment 3c such that, in Figure 1, it faces the at least one counter-torque rotor 11a. Accordingly, the at least one aero-acoustic liner cover sheet 22 is arranged on the outer segment side 18a. Furthermore, the at least one aero-acoustic liner cover sheet 22 preferentially comprises an acoustic resistance comprised in a range between 0,5*ρc and 2,5*ρc, where ρ defines an underlying density of surrounding air and c defines an associated speed of sound of this surrounding air.

According to a second embodiment, the liner arrangement segment 3c comprises at least one aerodynamic liner component 19 for reducing generation of aerodynamic noise resulting from blade tip clearance vortices occurring during rotation of the at least one counter-torque rotor 1 1 a of Figure 1 inside the at least one transverse duct 6 in operation of said rotorcraft 1 of Figure 1. The at least one aerodynamic liner component 19 is illustratively arranged in the region of the connecting part segment 8a and embodied as an annular channel segment. Thus, the at least one aerodynamic liner component 19 defines or replaces the connecting part segment 8a.

The at least one aerodynamic liner component 19 is preferentially at least partly equipped with perforates, wire meshes and/or micro perforates. These perforates, wire meshes and/or micro perforates preferably define at least one aerodynamic liner cover sheet 20 which is arranged on the liner arrangement segment 3c such that, in Figure 1, it faces the at least one counter-torque rotor 11a, at least to some extent. Accordingly, the at least one aerodynamic liner cover sheet 20 is arranged on the outer segment side 18a.

Preferably, the at least one aerodynamic liner cover sheet 20 comprises an acoustic resistance comprised in a range between 0,1*ρc and 2,5*ρc, where ρ defines an underlying density of surrounding air and c defines an associated speed of sound of said surrounding air. This acoustic resistance can be different to the acoustic resistance of the at least one aero-acoustic liner cover sheet 22 described above, i.e. the at least one aerodynamic liner cover sheet 20 and the at least one aero-acoustic liner cover sheet 22 may e.g. have different grid sizes.

It should be noted that the liner arrangement segment 3c is described above such that it comprises either the at least one aero-acoustic liner component 21 for tonal and broadband sound absorption according to the first embodiment, or the at least one aerodynamic liner component 19 for reducing generation of aerodynamic noise resulting from blade tip clearance vortices according to the second embodiment. In other words, the first and second embodiment can be realized completely independently of each other so that a given shroud of a rotorcraft can, in fact, be realized either with the at least one aero-acoustic liner component 21 or with the at least one aerodynamic liner component 19. However, according to a third embodiment, which is illustrated in Figure 3, the first and second embodiments are combined so that the at least one aero-acoustic liner component 21 and the at least one aerodynamic liner component 19 are applied together to the shroud 3 of the rotorcraft 1 of Figure 1 for an enhanced improvement of the noise characteristics of the counter-torque rotor 11 a of Figure 1.

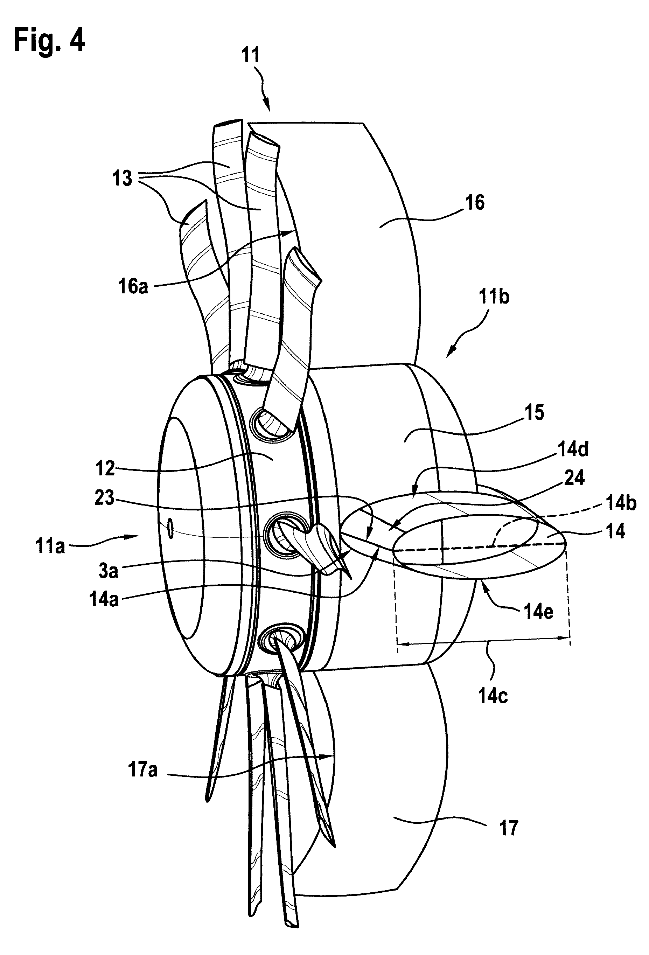

Figure 4 shows the at least one counter-torque rotor 11a and the at least one counter-torque stator 11b of Figure 1 and 2 to further illustrate the stator vanes 16, 17 with their leading edges 16a, 17a, as well as the drive shaft fairing 14 with its leading edge 14a, its upper side 14d and its lower side 14e. Illustratively, the drive shaft fairing 14 further comprises a stagnation line 23 and an associated chord line 14b with an underlying chord length 14c.

According to a fourth embodiment, the leading edge 14a of the drive shaft fairing 14 is at least partially equipped with associated acoustical damping means 24, which preferably comprise acoustical micro-perforated mesh. This acoustical micro-perforated mesh preferentially extends in direction of the associated chord line 14b of the drive shaft fairing 14 departing from the stagnation line 23 over a predetermined distance that comprises 1% to 50% of the underlying chord length 14c. Thereby, the acoustical micro-perforated mesh can be arranged on the upper side 14d, the lower side 14e or the upper and lower sides 14d, 14e of the drive shaft fairing 14, departing from the stagnation line 23.

According to a fifth embodiment, the leading edges 16a, 17a of the stator vanes 16,17 are likewise equipped with associated acoustical damping means that preferably comprise acoustical micro-perforated mesh. These associated acoustical damping means are preferably embodied similar to the above-described acoustical damping means 24, so that illustration and a detailed description thereof are omitted for clarity and simplicity of the drawings, as well as brevity and conciseness of the description.

It should be noted that the acoustical damping means 24 of the drive shaft fairing 14 according to the fourth embodiment and the acoustical damping means of the stator vanes 16,17 according to the fifth embodiment can be implemented on the counter-torque stator 11 b completely independently of each other, so that a given counter-torque stator of a rotorcraft can, in fact, be realized either with the acoustical damping means 24 of the drive shaft fairing 14 or with the acoustical damping means of the stator vanes 16,17. However, according to a sixth embodiment, which is illustrated in Figure 4, the fourth and fifth embodiments are combined so that the acoustical damping means 24 of the drive shaft fairing 14 and the acoustical damping means of the stator vanes 16,17 are applied together to the counter-torque stator 1 1 b for an enhanced improvement of the noise characteristics of the counter-torque rotor 11a.

It should further be noted that each one of the fourth through sixth embodiments can be combined with one of the first through third embodiments. In other words, the acoustical damping means 24 of the drive shaft fairing 14 and/or the acoustical damping means of the stator vanes 16,17 can be provided on a counter-torque device of a given rotorcraft, e.g. the counter-torque device 11 of the rotorcraft 1 of Figure 1, together with the at least one aero-acoustic liner component 21 for tonal and broadband sound absorption of Figure 3 and/or the at least one aerodynamic liner component 19 for reducing generation of aerodynamic noise resulting from blade tip clearance vortices of Figure 3.

Finally, it should be noted that further modifications are also within the common knowledge of the person skilled in the art and, thus, also considered as being part of the present invention.

### Reference List

- 1: rotorcraft
- 1a: main rotor
- 2: fuselage
- 2a: tail boom
- 3: shroud
- 3a: shroud liner arrangement
- 3b: shroud segment
- 3c: shroud liner arrangement segment
- 4: bumper
- 5: fin
- 5a: tail wing
- 5b: rudder
- 6: transverse duct
- 6a: transverse duct diffusor angle
- 7: collector part
- 7a: collector part segment
- 8: connecting part
- 8a: connecting part segment
- 9: diffusor part
- 9a: diffusor part segment
- 10: duct-type tail portion
- 11: counter-torque device
- 11a: counter-torque rotor
- 11b: counter-torque stator
- 12: counter-torque rotor hub
- 13: counter-torque rotor blades
- 13a: outgoing air flow
- 13b: incoming air flow
- 14: drive shaft fairing
- 14a: drive shaft fairing leading edge
- 14b: drive shaft fairing chord line
- 14c: drive shaft fairing chord line length
- 14d: drive shaft upper side
- 14e: drive shaft lower side
- 15: gearbox fairing
- 16, 17: stator vanes
- 16a, 17a: stator vanes leading edges
- 18: transverse duct segment
- 18a: outer transverse duct segment side
- 18b: inner transverse duct segment side
- 19: aerodynamic liner component
- 20: aerodynamic liner cover sheet
- 21: aero-acoustic liner component
- 21a: aero-acoustic liner depth
- 22: aero-acoustic liner cover sheet
- 23: drive shaft fairing stagnation line
- 24: acoustical damping means

## Claims

1. A rotorcraft (1) with at least one main rotor (1a) and at least one counter-torque rotor (11a), comprising:
at least one duct-type portion (10) provided with a shroud (3) that defines at least one transverse duct (6), said at least one counter-torque rotor (1 1 a) comprising a plurality of counter-torque rotor blades (13) and being rotatably arranged within said at least one transverse duct (6), and
said shroud (3) being equipped in the region of said at least one transverse duct (6) at least partly with a liner arrangement (3a), said liner arrangement (3a) being at least adapted for reducing generation of aerodynamic noise resulting from blade tip clearance vortices occurring during rotation of said at least one counter-torque rotor (11a) inside said at least one transverse duct (6) in operation of said rotorcraft (1).

2. The rotorcraft (1) according to claim 1,
**characterized in that** said liner arrangement (3a) comprises at least one aerodynamic liner component (19) for reducing generation of aerodynamic noise resulting from blade tip clearance vortices occurring during rotation of said at least one counter-torque rotor (1 1 a) inside said at least one transverse duct (6) in operation of said rotorcraft (1).

3. The rotorcraft (1) according to claim 2,
**characterized in that** said at least one aerodynamic liner component (19) is at least partly equipped with perforates, wire meshes and/or micro perforates.

4. The rotorcraft (1) according to claim 3,
**characterized in that** said perforates, wire meshes and/or micro perforates define at least one aerodynamic liner cover sheet (20) facing said counter-torque rotor (11a).

5. The rotorcraft (1) according to claim 4,
**characterized in that** said at least one aerodynamic liner cover sheet (20) comprises an acoustic resistance comprised in a range between 0,1*ρc and 2,5*ρc, where ρ defines an underlying density of surrounding air and c defines an associated speed of sound of said surrounding air.

6. The rotorcraft (1) according to claim 1,
**characterized in that** said liner arrangement (3a) is further adapted for tonal and broadband sound absorption.

7. The rotorcraft (1) according to claim 6,
**characterized in that** said liner arrangement (3a) comprises at least one aero-acoustic liner component (21) for tonal and broadband sound absorption and at least one aerodynamic liner component (19) for reducing generation of aerodynamic noise resulting from blade tip clearance vortices occurring during rotation of said at least one counter-torque rotor (11a) inside said at least one transverse duct (6) in operation of said rotorcraft (1).

8. The rotorcraft (1) according to claim 7,
**characterized in that** said at least one aero-acoustic liner component (21) and said at least one aerodynamic liner component (19) are at least partly equipped with perforates, wire meshes and/or micro perforates.

9. The rotorcraft (1) according to claim 8,
**characterized in that** said perforates, wire meshes and/or micro perforates define at least one aero-acoustic liner cover sheet (22) and at least one aerodynamic liner cover sheet (20), said at least one aero-acoustic liner cover sheet (22) and said at least one aerodynamic liner cover sheet (20) facing said counter-torque rotor (11a) at least approximately.

10. The rotorcraft (1) according to claim 9,
**characterized in that** said at least one aero-acoustic liner cover sheet (22) and said at least one aerodynamic liner cover sheet (20) comprise acoustic resistances comprised in a range between 0,5*ρc and 2,5*ρc, where ρ defines an underlying density of surrounding air and c defines an associated speed of sound of said surrounding air.

11. The rotorcraft (1) according to claim 10,
**characterized in that** said at least one aero-acoustic liner cover sheet (22) and said at least one aerodynamic liner cover sheet (20) comprise different acoustic resistances.

12. The rotorcraft (1) according to claim 8,
**characterized in that** said at least one aero-acoustic liner component (21) comprises a depth (21a) that varies depending on an underlying diffusor angle (6a) of said transverse duct (6) ), said depth (21a) contributing to said broadband sound absorption of said liner arrangement (3a).

13. The rotorcraft (1) according to claim 1,
**characterized in that** said at least one counter-torque rotor (11a) is rotatably mounted to an associated drive shaft fairing (14) that is fixedly supported within said at least one transverse duct (6), said associated drive shaft fairing (14) comprising a leading edge (14a) facing said at least one counter-torque rotor (11a), said leading edge (14a) being equipped with associated acoustical damping means (24).

14. The rotorcraft (1) according to claim 13,
**characterized in that** said associated acoustical damping means (24) comprises acoustical micro-perforated mesh.

15. The rotorcraft (1) according to claim 14,
**characterized in that** said acoustical micro-perforated mesh extends in direction of an associated chord line (14b) of said associated drive shaft fairing (14) departing from a drive shaft fairing stagnation line (23) over a predetermined distance that comprises 1% to 50% of an underlying drive shaft fairing chord length (14c).

16. The rotorcraft (1) according to claim 1,
**characterized in that** said at least one counter-torque rotor (11a) is rotatably mounted to an associated gearbox fairing (15) that is fixedly supported by means of associated vanes (16, 17) within said at least one transverse duct (6), said associated vanes (16, 17) comprising leading edges (16a, 17a) facing said at least one counter-torque rotor (11a), said leading edges (16a, 17a) being equipped with associated acoustical damping means.
